# FASCICULE DE BREVET EUROPEEN

(11) **EP 0 700 141 B1**
(45) Date de publication et mention de la délivrance du brevet: **21.01.1998**
(21) Numéro de dépôt: 95401982.4
(22) Date de dépôt: 31.08.1995
(51) Int. Cl.: H02H 5/04, G01K 7/01

(54) **Détecteur de température sur circuit intégré**
Temperaturdetektor auf einer integrierten Schaltung
Temperature detector on an integrated circuit

(30) Priorité: 31.08.1994 FR 9410499
(43) Date de publication de la demande: 06.03.1996
(73) Titulaire: SGS-THOMSON MICROELECTRONICS S.A., 94250 Gentilly (FR)
(72) Inventeur: Malherbe, Alexandre c/o Cabinet Ballot-Schmit,, F-94230 Cachan (FR)
(74) Mandataire: Schmit, Christian Norbert Marie

(56) Documents cités:
- EP-A- 0 369 530
- WO-A-91/04473
- FR-A- 2 627 027

## Description

L'invention concerne les circuits intégrés, et plus particulièrement un moyen de détection de la température du circuit intégré, ce moyen faisant partie du circuit intégré lui-même.

L'application principale qui est visée par cette invention est la protection contre une fraude qui consisterait à chauffer volontairement le circuit intégré jusqu'à une température où il ne peut plus fonctionner normalement. En effet, les circuits intégrés sont conçus pour accomplir leurs fonctions dans une plage de températures spécifiée. Si on sort de cette plage, le fonctionnement peut devenir anormal et une utilisation frauduleuse de cette anomalie peut être envisagée. On prévoit donc un détecteur de température qui déclenche une action de protection appropriée (en général une inhibition de fonctionnement du circuit intégré) lorsque la température sort des limites de la gamme pour laquelle le fonctionnement normal du circuit est assuré. En pratique c'est surtout vers le haut de la gamme de températures qu'on doit prendre des mesures anti-fraude.

L'invention peut être utilisée aussi pour d'autres applications dans lesquelles la température du circuit intégré doit être contrôlée. Cependant, elle sera décrite à propos de cette application particulière pour laquelle elle a été conçue.

Dans cette application, une méthode de protection contre les fraudes consiste à tester le fonctionnement du circuit intégré jusqu'à une température (Tp2) plus élevée que la température maximale de fonctionnement autorisée (Tp1), et on place un détecteur de température qui déclenche une action de protection à une température de référence Tpr comprise entre ces deux températures Tp1 et Tp2. Typiquement, la gamme de fonctionnement normal va jusqu'à Tp1 = 85°C (pour des applications courantes). La température de test peut être de Tp2 = 125°C. La température de déclenchement du détecteur Tpr est comprise entre les deux, par exemple 90°C.

Des détecteurs de température existent déjà. Ils utilisent une mesure du courant de fuite de jonctions PN polarisées en inverse : ce courant de fuite présente une forte variation en fonction de la température. Ainsi le document WO-A-91/04473 décrit un détecteur de seuil de température basé sur une jonction en inverse. Mais ces détecteurs mettent en oeuvre des courants inverses très faibles (de l'ordre de quelques dizaines de picoampères), donc difficiles à mesurer. Ils sont très sensibles au bruit et ont des constantes de temps très élevées, ce qui rend ces dispositifs difficilement testables. Or le test de ces détecteurs est indispensable si on veut qu'ils accomplissent leur fonction dans les conditions souhaitées. On connait aussi du document EP-A-0 3 69 530 un détecteur de seuil de température basé sur une jonction en direct et une résistance, et qui utilise une comparaison basée sur des variations de signes opposés. Un autre détecteur décrit dans le document FR-A-2 627 027 utilise des transistors MOS polarisés en limite de conduction.

L'invention propose d'utiliser un type de détecteur différent. Ce détecteur utilise deux transistors MOS semblables et une jonction PN, et son fonctionnement repose sur la comparaison de la conduction de ces deux transistors, le deuxième ayant une tension grille-source supérieure en valeur absolue à celle du premier, la différence étant la chute de tension Vbe aux bornes de la jonction PN polarisée en direct. Du fait de la présence de cette différence de tensions grille-source, les courbes de variation avec la température des courants dans les transistors ne sont pas identiques. Ces courbes, ou des courbes déduites des premières par homothétie, se croisent pour une certaine valeur de température. La détection du croisement permet de détecter cette valeur et donc de définir un seuil de température détectable.

La raison principale pour laquelle les courbes de variation ne sont pas identiques est la présence de la chute de tension Vbe dans le circuit grille-source du deuxième transistor; cette chute de tension a en effet la particularité de diminuer avec la température. La tension grille-source de ce deuxième transistor, plus élevée que celle du premier, diminue plus vite que celle du premier. Le courant dans le deuxième transistor diminue plus vite que le courant dans le premier. Si à la température ambiante le courant dans le deuxième transistor est plus élevé que dans le premier (mais pas trop quand même), les courbes de variation de courant avec la température peuvent se croiser. Le point de croisement dépend des dimensions relatives des transistors étant donné que pour une tension grille-source donnée, le courant est proportionnel au rapport largeur/longueur (W/L) du transistor. En choisissant les dimensions relatives, on peut donc définir la température à laquelle les courants sont égaux. Si on utilise un comparateur de courants, on peut alors fournir un signal de déclenchement lorsque la température dépasse la valeur pour laquelle on a l'égalité des courants dans les transistors ou, comme on le verra plus loin, la valeur pour laquelle on a égalité de courants déduits par homothétie des courants dans les transistors.

L'invention propose un circuit intégré avec détecteur de seuil de température, comportant deux transistors MOS de même type de conductivité, une jonction PN polarisée en direct ayant une chute de tension Vbe à ses bornes, et connectée entre la source d'un premier de ces transistors et un potentiel fixe, et des moyens de comparaison des courants circulant dans les deux transistors délivrant en sortie un signal de détection de seuil de température, caractérisé en ce que la source du deuxième transistor est connectée directement à ce potentiel fixe, en sorte que la tension grille-source du deuxième transistor est supérieure à la tension grille-source du premier transistor d'une valeur égale à la chute de tension Vbe.

Les moyens de comparaison comportent de préférence un moyen de recopie du courant circulant dans l'un des transistors, ce moyen de recopie étant en série avec le deuxième transistor. La recopie se fait avec un facteur de proportionnalité qui permet de régler la température de basculement.

De préférence, l'un des deux transistors MOS a sa tension grille-source légèrement supérieure à sa tension de seuil, et ce résultat est obtenu en reliant le drain et la grille de ce transistor.

Ce détecteur est réalisable notamment en technologie CMOS, dans laquelle certains transistors MOS sont formés dans des caissons de type de conductivité opposé au substrat. On peut alors utiliser comme jonction PN la jonction base-émetteur d'un transistor bipolaire parasite formé entre le substrat (collecteur du transistor bipolaire), un caisson de conductivité opposé au substrat (base du transistor) et une diffusion de type de conductivité opposé au caisson, formée dans ce caisson (émetteur du transistor).

Une réalisation pratique du détecteur selon l'invention consiste à relier la source d'un premier transistor MOS en série avec la jonction PN, celle-ci étant reliée par ailleurs à un potentiel fixe; ce premier transistor a sa grille reliée à son drain; un deuxième transistor MOS, de même type que le premier, a sa grille reliée à la grille du premier, et sa source directement reliée au même potentiel fixe. La sortie du détecteur est prélevée sur le drain du deuxième transistor. Les drains des deux transistors sont alimentés par des sources de courant, de sorte qu'il circule un courant dans chacun d'eux, et un courant direct dans la jonction PN. Le montage est tel que les tensions grille-source des deux transistors sont différentes, la différence étant égale à la chute de tension directe (Vbe) dans la jonction PN.

Le comparateur de courant peut être réalisé en alimentant le drain du premier transistor et le drain du deuxième par des sources de courant fournissant des courants dans un rapport constant l'un par rapport à l'autre. Ce rapport est défini par les géométries relatives des transistors constituant ces sources de courant.

D'autres caractéristiques et avantages de l'invention apparaîtront à la lecture de la description détaillée qui suit et qui est faite en référence aux dessins annexés dans lesquels :
- la figure 1 représente un schéma électrique simple d'une réalisation d'un détecteur de température selon l'invention;
- la figure 2 représente un diagramme de courants pouvant circuler dans les deux transistors MOS de la figure 1;
- la figure 3 représente un autre diagramme de courants dans les transistors de la figure 1;
- la figure 4 et la figure 5 représentent des réalisations pratiques simples de l'invention;
- la figure 6 représente une coupe de circuit intégré incorporant le détecteur de la figure 1;
- la figure 7 représente le détecteur, modifié pour pouvoir fonctionner avec une tension d'alimentation particulièrement basse;
- la figure 8 représente un schéma modifié pour inclure en outre un mode de fonctionnement d'attente à consommation réduite.

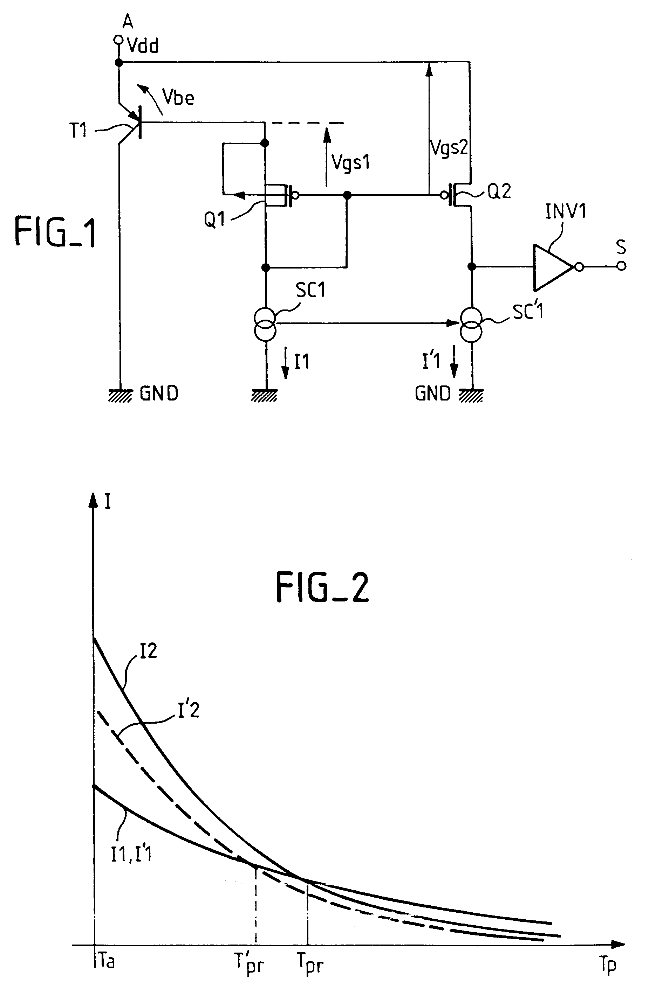

Le détecteur simple de la figure 1 comporte deux transistors à effet de champ Q1 et Q2 de même nature, c'est-à-dire de même type de conductivité. Ils peuvent être de type NMOS ou PMOS. Dans l'exemple décrit, ils sont PMOS; s'ils étaient NMOS, il faudrait inverser tous les types de conductivité et les sens de potentiels du schéma pour obtenir un schéma symétrique. On utilise de préférence des transistors à canal P si la technologie utilisée est une technologie CMOS sur substrat P avec caissons de type N pour les transistors à canal P.

Le premier transistor Q1 a de préférence son drain relié à sa grille G1. Sa source S1 est reliée à la base d'un transistor bipolaire PNP T1 dont l'émetteur est relié à une borne d'alimentation A, à un potentiel fixe Vdd positif (par exemple 3 volts ou 5 volts). Le collecteur du transistor T1 est de préférence relié à la masse GND. Toutefois, ce n'est pas obligatoire. On verra qu'en pratique, la jonction collecteur-base de ce transistor est la jonction caisson-substrat dans une technologie CMOS sur substrat P à caissons N. Le substrat définit alors le potentiel de masse, ce qui explique que le collecteur du transistor soit représenté avec une connexion à la masse.

La jonction émetteur-base du transistor T1 est une jonction PN polarisée en direct. Le courant de base de ce transistor T1 traverse le transistor PMOS Q1.

Le drain du transistor Q1 est relié à une source de courant constant SC1 qui est par ailleurs reliée à la masse. Cette source fixe le courant I1 qui parcourt le transistor Q1 et qui parcourt également la base du transistor T1.

Le deuxième transistor PMOS, Q2, a sa grille reliée à la grille de Q1, et sa source reliée directement à la borne d'alimentation A à Vdd.

On sait que le courant qui peut traverser un transistor MOS dépend de plusieurs facteurs qui sont :
- la valeur absolue Vgs de la tension grille-source;
- le rapport largeur/longueur de grille (W/L) du transistor;
- la température.

Parmi les autres caractéristiques physiques qui peuvent entrer en jeu, il y a la tension de seuil Vt du transistor. On suppose qu'elle est la même pour les deux transistors Q1 et Q2. Elle peut varier en fonction de la température, mais de manière identique pour les deux transistors.

La valeur absolue Vgs2 de la tension grille-source du transistor Q2 est toujours supérieure à la valeur absolue Vgs1 de la tension grille-source du transistor Q1. La différence est en effet la valeur absolue Vbe de la chute de tension émetteur-base du transistor bipolaire T1.

Par conséquent, à une température donnée et pour des dimensions identiques de transistors Q1 et Q2, le courant dans le transistor Q2 tend à être plus grand que le courant dans le transistor Q1.

Le courant dans le transistor Q1 est fixé par la source de courant SC1; ce courant impose alors la valeur de la tension Vgs1 et celle de la tension Vbe pour des dimensions données des transistors Q1 et T1.

La tension grille-source Vgs2 du deuxième transistor Q2 est donc également déterminée puisque, en valeur absolue, elle est la somme des tensions Vgs1 et Vbe.

Du fait qu'il a une tension grille-source Vgs2 imposée, le transistor Q2 tend donc à laisser passer un courant I2 qui ne dépend que de son rapport largeur sur longueur de grille. Le courant réellement présent dans le transistor Q2 peut être égal à I2 si la polarisation de Q2 le permet; si on tend par ailleurs à imposer un courant différent dans le transistor Q2, le conflit qui en résulte fera monter ou descendre le potentiel du drain de Q2. On expliquera plus loin comment cela permet de détecter un dépassement de seuil de température.

Si la température Tp augmente, le courant I1 peut varier (en pratique il diminue). Mais le transistor Q1, du fait de son montage en diode (grille reliée au drain) reste dans un état où sa tension grille-source est légèrement supérieure à sa tension de seuil Vtp. Le courant I2 qui tend à parcourir le transistor Q2 va varier dans le même sens (en pratique une diminution). Mais la tension base-émetteur Vbe de T1 diminue avec la température. Par conséquent, l'écart entre les tensions grille-source des deux transistors va diminuer. Le courant I2 va donc se réduire dans des proportions plus grandes que le courant I1, et non pas dans la même proportion que I1.

La figure 2 représente la variation du courant I1 avec la température et la variation plus importante du courant I2 avec la température. Comme les diminutions ne sont pas proportionnelles, les courbes ne sont pas parallèles. Elles peuvent se croiser pour une température donnée Tpr au dessus de la température ambiante Ta, si le transistor Q2 a des dimensions relatives plus petites que le transistor Q1.

Le point de croisement dépend du rapport entre les courants I1 et I2 à la température ambiante. Et ce rapport dépend des dimensions relatives des transistors Q1 et Q2.

Sur la figure 2, on a représenté une courbe de variation de I1 et deux courbes de variation de I2; référencées I2 et I'2. La première courbe I2 correspond à un premier rapport k entre les dimensions des transistors Q1 et Q2, avec k=(W2/L2)/(W1/L1) où W2, L2 sont les largeur et longueur du deuxième transistor et W1, L1 sont les dimensions correspondantes pour le premier transistor. La deuxième courbe I'2, en pointillés, correspond à un deuxième rapport k' entre les dimensions des transistors Q1 et Q2.

On voit clairement que le point d'intersection des courbes I1 et I2 dépend du rapport k. Par conséquent, on peut choisir k pour que les courbes se coupent pour une température désirée, qui est la température critique qu'on ne veut pas dépasser.

Pour détecter qu'on a atteint cette température critique, il faut alors détecter l'égalité entre le courant I1 qui parcourt le transistor Q1 et le courant I2 qui tend à circuler dans le transistor Q2 du fait de sa tension grille-source Vgs2, de ses dimensions, et de la température.

Pour cela, le plus simple est d'utiliser le montage représenté à la figure 1 : une deuxième source de courant SC'1 liée à la source SC1 recopie le courant de la source SC1 et tend à faire circuler un courant I'1 égal à I1. La recopie se fait quelle que soit la température, c'est-à-dire que si I1 varie avec la température, I'1 varie de la même manière.

Cette source de courant est connectée au drain du transistor Q2 et tend à faire passer un courant I'1=I1 dans ce transistor. Comme par ailleurs le montage tend à faire passer un courant I2 dans le transistor Q2, il n'y a équilibre qu'à la température critique Tpr où I2=I'1.

Si I2 est supérieur à I'1 (en pratique pour des températures inférieures à Tpr), le transistor Q2 tend à se saturer : en effet, il est parcouru par un courant plus faible que ce que lui imposerait normalement sa tension grille-source. Le potentiel drain-source de Q2 tend à rester proche de zéro. Le potentiel du drain de Q2 reste donc voisin de Vdd.

Si au contraire, I2 tend à être inférieur à I'1, en pratique lorsqu'on dépasse la température critique, c'est la source de courant SC'1 qui sera perturbée, ne pouvant débiter tout le courant qu'elle devrait débiter. Elle va se saturer. Le potentiel du drain de Q2 va descendre très près de zéro.

Le potentiel du drain de Q2 représente donc d'une manière binaire le fait qu'on a dépassé ou non la température critique Tpr. Le drain de Q2 est de préférence relié à l'entrée d'un inverseur INV1 qui fournit à sa sortie un signal de commande représentant le dépassement ou le non-dépassement de température critique. La sortie S de l'inverseur INV1 peut être utilisée par exemple comme commande d'inhibition de tout ou partie du circuit intégré.

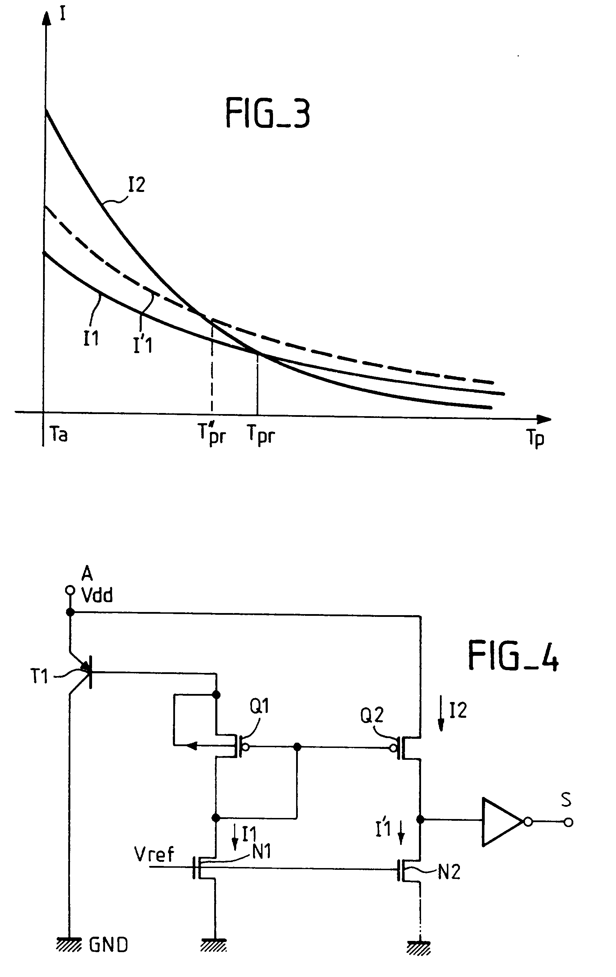

On notera, en se référant à la figure 3, qu'on peut comparer non pas le courant I2 et un courant I'1=I1 mais le courant I2 et un courant I'1 proportionnel à I1, le rapport de proportionnalité I'1/I1 restant cependant de préférence constant lorsque la température varie.

En effet, en supposant que les dimensions relatives des transistors Q1 et Q2 imposent des courbes de courant I2 et I1 telles que visibles sur la figure 3, on peut avoir une source de courant SC'1 fournissant un courant I'1 proportionnel à I1, une variation du coefficient de proportionnalité déplaçant la courbe I'1 par homothétie. Le point de croisement des courbes I'1 et I2 peut alors être réglé par un choix approprié de ce rapport.

Les sources de courant SC1 et SC'1 seront en principe réalisées à l'aide de transistors, par exemple des transistors montés en miroir de courant, et il est facile de régler le rapport de proportionnalité par un choix de dimensions relatives de ces transistors.

On comprend donc qu'on peut régler le seuil de température détectée soit par le choix des dimensions relatives des transistors Q2 et Q1, soit par le choix du rapport de proportionnalité des sources SC1 et SC'1, soit encore par une combinaison de ces deux possibilités.

La figure 4 représente un exemple simple de réalisation dans lequel les sources de courant SC1 et SC'1 sont réalisées à partir de deux transistors N1 et N2 à canal N, dont les grilles sont reliées à une source de tension commune Vref, dont les sources sont à la masse, et dont les drains sont reliés l'un au drain de Q1 (transistor N1), l'autre au drain de Q2 (transistor N2).

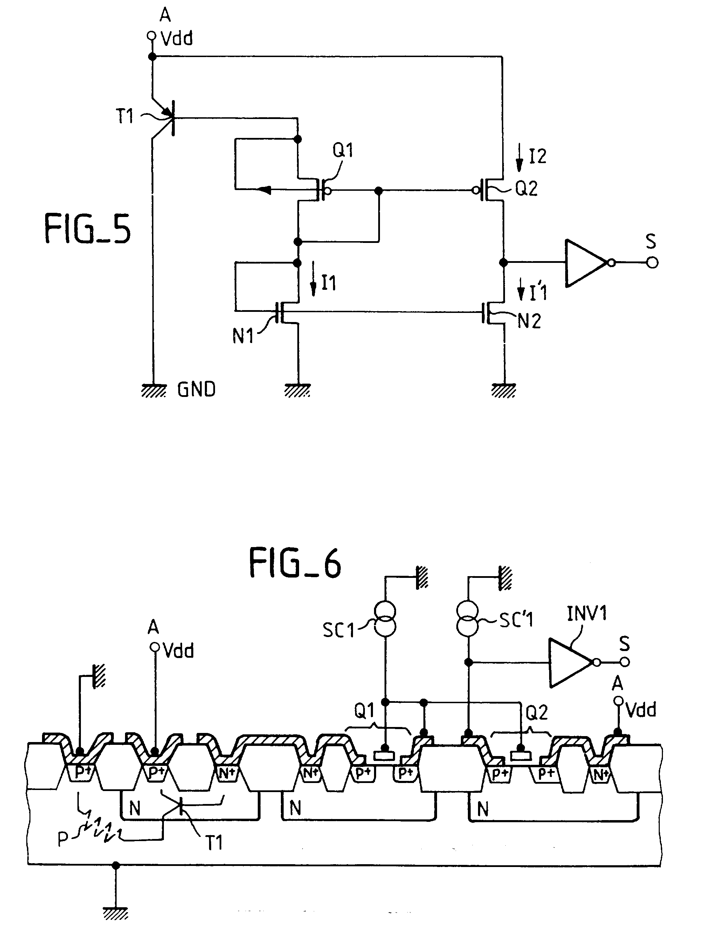

Dans une réalisation simple représentée à la figure 5, la tension Vref est prélevée simplement sur le drain du transistor N1, c'est-à-dire que ce transistor est monté en diode avec sa grille reliée à son drain.

Les transistors N1 et N2 sont soit de dimensions identiques (cas expliqué en référence à la figure 2), soit de dimensions différentes (cas expliqué en référence à la figure 3); dans ce dernier cas, le rapport entre les géométries W/L de N1 et N2 permet d'ajuster le seuil de température détecté par le circuit.

La figure 6 représente une vue en coupe de circuit intégré, montrant comment on peut réaliser pratiquement le détecteur de température en utilisant comme transistor bipolaire PNP T1 un transistor parasite formé entre le substrat de type P (collecteur), un caisson N diffusé dans le substrat (base), et une région P+ diffusée dans le caisson (émetteur). Cette région P+ est reliée à la tension d'alimentation Vdd. Le substrat est relié à la masse. La technologie est une technologie CMOS sur substrat P; si c'était une technologie CMOS sur substrat N, il faudrait inverser tous les types de conductivité et les sens de potentiels dans les schémas électriques du détecteur.

Le transistor Q1 est formé dans un deuxième caisson N; sa source est reliée par une connexion à un contact ohmique (diffusion N+) relié au caisson; ce contact ohmique est par ailleurs relié à la base du transistor bipolaire T1 par l'intermédiaire d'une connexion conductrice et d'un autre contact ohmique (diffusion N+) diffusé dans le premier caisson; le drain du transistor Q1 est relié par des connexions d'une part à sa grille, d'autre part à la source de courant SC1, et enfin à la grille du transistor Q2.

Le transistor Q2 est formé dans un troisième caisson N; son drain est relié par une connexion à la borne d'alimentation A à Vdd. Sa source est reliée à la source de courant SC'1 et à l'inverseur INV1. Le troisième caisson est de préférence relié à la tension Vdd par un contact ohmique de type N+.

Si on revient au schéma de la figure 5 (transistor N1 monté en diode), ce schéma fonctionne bien à condition que la valeur de la tension d'alimentation Vdd soit suffisante pour que la branche T1, Q1, N1 soit parcourue par un courant, c'est-à-dire que les trois transistors puissent être rendus conducteurs. Or ceci n'est possible que si la tension Vdd est égale au moins à la somme des tensions de seuil Vtn (environ 0,8 à 1 volt), Vtp (environ 0,8 à 1 volt), et de la chute de tension directe Vbe de la jonction émetteur-base du transistor T1 (environ 0,6 volt). Il faut donc au moins 2,4 volts d'alimentation.

Cependant, dans certains cas, on veut pouvoir fonctionner dans une plage de tensions d'alimentation plus grande. Typiquement, on souhaite que le circuit fonctionne pour des tensions d'alimentation allant de 2 volts à 7 volts.

Dans ce cas, il est préférable d'appliquer une tension grille-source d'environ 1 volt au transistor N1 par un autre moyen qu'un simple montage en diode de ce transistor.

Pour cela, on réalise une source de tension de référence qui est apte à maintenir une tension de commande sur la grille du transistor N1 même lorsque la tension d'alimentation Vdd n'est que de 2 volts environ.

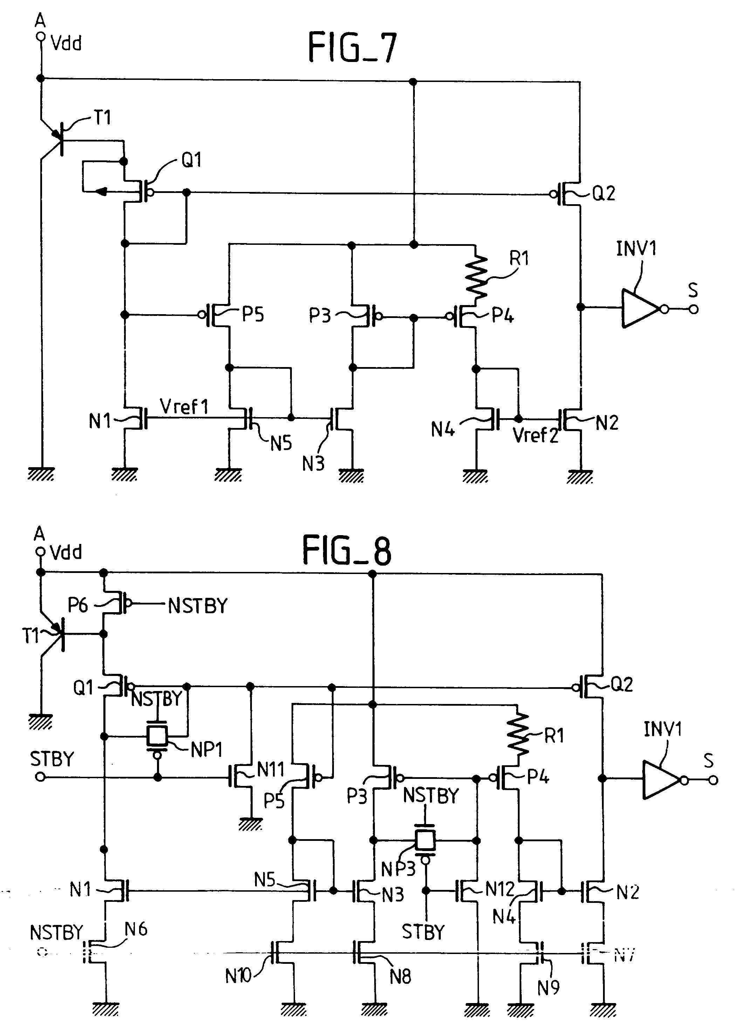

Le schéma de la figure 7 permet de répondre à cet objectif. Les éléments communs à la figure 4 portent les mêmes références.

La tension de référence Vref nécessaire à la commande de grille de N1 et N2 est produite par une source de tension de référence fonctionnant à basse tension d'alimentation Vdd, c'est-à-dire même pour Vdd égal à 2 volts. La tension de référence produite Vref est en pratique obtenue sur deux sorties distinctes Vref1 (pour commander la grille du transistor N1) et Vref2 (pour commander la grille du transistor N2). Ces deux tensions sont pratiquement identiques.

La source de tension de référence comporte ici six transistors, agencés de la manière suivante :
- un transistor MOS P3, a sa source reliée à Vdd, sa grille reliée à son drain, et son drain au drain d'un transistor MOS N3 à canal N dont la source est à la masse.
- un transistor MOS P4 à canal P a sa source reliée à Vdd par l'intermédiaire d'une résistance R1, sa grille reliée à la grille de P3, et son drain relié à la grille et au drain d'un transistor N4 à canal N; la source du transistor N4 est à la masse.
- un transistor N5 à canal N a sa grille reliée à son drain et reliée par ailleurs à la grille de N3, et il a sa source à la masse; la grille de N5 est reliée par ailleurs à la grille du transistor N1, et c'est sur cette grille qu'apparaît la tension de référence Vref1; Vref1 est à peu près égal à la tension de seuil du transistor N5 à canal N, soit environ 1 volt;
- enfin, un transistor P5 à canal P sert à fournir un courant suffisant au transistor N5; son drain est relié au drain de N5, sa source est à Vdd, et sa grille est connectée à la grille des transistors Q1 et Q2.

La tension Vref2 est présente sur le drain et la grille du transistor N4, celles-ci étant donc connectées à la grille de N2.

On comprendra que le schéma de principe est le même que celui de la figure 4, à l'exception du fait que des tensions de référence Vref1 et Vref2 séparées sont appliquées sur les grilles de N1 et N2; de plus, ces tensions de référence sont établies par un montage qui fonctionne même lorsque la tension d'alimentation Vdd est très proche de la somme des valeurs absolues des tensions de seuil des transistors N et P.

D'autres types de sources de tension de référence pourraient être utilisées pour le même objectif.

Enfin, ce détecteur de température consomme du courant en permanence. Il est souhaitable de supprimer autant que possible cette consommation. On prévoit donc de préférence qu'un signal de commande STBY contrôle différentes branches de consommation de courant pour interrompre cette consommation lorsque le circuit est en mode d'attente à consommation réduite ou mode "standby".

La figure 8 représente une modification de la figure 7, dans laquelle on a rajouté des transistors interrupteurs supplémentaires pour permettre un fonctionnement en mode d'attente à consommation réduite.

En pratique, le signal STBY, et son complément logique NSTBY, sont appliqués aux grilles de commande de différents transistors placés en série dans les différentes branches du circuit. En particulier, on peut prévoir des transistors N6, N7, N8, N9, N10 respectivement en série entre les transistors N1, N2, N3, N4, N5 et la masse pour interrompre la liaison de ces derniers avec la masse en mode d'attente; un transistor P6 entre la base du transistor T1 et Vdd pour mettre cette base à Vdd en mode d'attente en bloquant la jonction émetteur base de T1. Des interrupteurs sont prévus par ailleurs dans les liaisons grille-drain des transistors Q1 et P3 pour interrompre ces liaisons en mode d'attente. Ces interrupteurs NP1 et NP3 sont de préférence constitués par chacun par un transistor MOS en canal P en parallèle avec un transistor à canal N, commandés respectivement par les signaux STBY et NSTBY. Enfin, deux transistors à canal N, N11 et N12, commandés par le signal STBY, permettent de mettre à la masse, en mode d'attente, d'une part la grille de Q1 et d'autre part la grille de P3 lorsque ces grilles sont déconnectées de leur drain respectif.

## Revendications

1. Circuit intégré avec détecteur de seuil de température, comportant deux transistors MOS (Q1 et Q2) de même type de conductivité, une jonction PN polarisée en direct, ayant une chute de tension Vbe à ses bornes et connectée entre la source d'un premier de ces transistors (Q1) et un potentiel fixe (Vdd), et des moyens (SC1, SC'1) de comparaison des courants circulant dans les deux transistors délivrant en sortie un signal de détection de seuil de température, caractérisé en ce que la source du deuxième transistor (Q2) est connectée directement à ce potentiel fixe, en sorte que la tension grille-source (Vgs2) du deuxième transistor (Q2) est supérieure à la tension grille-source (Vgsl) du premier transistor (Q1) d'une valeur égale à la chute de tension Vbe.

2. Circuit intégré selon la revendication 1, caractérisé en ce que le premier transistor (Q1) a sa grille reliée à son drain, le rapport entre les dimensions des deux transistors permettant de fixer le seuil de détection de température désiré.

3. Circuit intégré selon l'une des revendications 1 et 2, caractérisé en ce que les moyens de comparaison comportent un moyen (SC'1) de recopie du courant circulant dans l'un des transistors, ce moyen de recopie étant en série avec le deuxième transistor (Q2).

4. Circuit intégré selon la revendication 3, caractérisé en ce qu'il comporte une première source de courant (SC1) en série avec le premier transistor (Q1) pour imposer un courant déterminé (Il) dans ce transistor, et une deuxième source de courant (SC'1) recopiant avec un facteur de proportionnalité fixe le courant de la première source, ce facteur permettant de fixer le seuil de température désiré.

5. Circuit intégré selon la revendication 4, caractérisé en ce que la deuxième source de courant (SC'1) est en série avec le drain du deuxième transistor (Q2).

6. Circuit intégré selon la revendication 5, caractérisé en ce que la deuxième source de courant comporte un transistor supplémentaire (N2) de type opposé aux premier et second transistors, le transistor supplémentaire ayant son drain relié au drain du deuxième transistor et sa source reliée à une masse, et en ce que la sortie du détecteur est prélevée au point de jonction des drains du deuxième transistor et du transistor supplémentaire.

7. Circuit intégré selon l'une des revendications précédentes, caractérisé en ce qu'il est réalisé en technologie CMOS avec caissons de type de conductivité opposé au substrat, que la jonction PN est constituée d'une part par un caisson, relié à la source du premier transistor, et d'autre part par une diffusion superficielle formée dans le caisson et de type opposé au caisson, cette diffusion étant reliée à la borne d'alimentation.

## Patentansprüche

1. Integrierter Schaltkreis mit Temperaturschwellendetektor, der zwei MOS-Transistoren (Q1 und Q2) vom gleichen Leitfähigkeitstyp, einen PN-Übergang, der in Durchlaßrichtung einen Spannungsabfall Vbe an seinen Anschlüssen aufweist und zwischen Source eines ersten dieser Transistoren (Q1) und ein festes Potential (Vdd) geschaltet ist, und Vorrichtungen (SC1, SC'1) zum Vergleichen von in den zwei Transistoren fließenden Strömen, die am Ausgang ein Signal bei der Erfassung der Temperaturschwelle ausgeben, umfaßt, dadurch gekennzeichnet, daß die Source des zweiten Transistors (Q2) direkt mit dem festen Potential derart verbunden ist, daß die Spannung zwischen Gate und Source (Vg2) des zweiten Transistors (Q2) größer als die Spannung zwischen Gate und Source (Vsgl) des ersten Transistors (Q1) ist, wobei der Wert gleich dem Spannungsabfall Vbe ist.

2. Integrierter Schaltkreis nach Anspruch 1, dadurch gekennzeichnet, daß das Gate des ersten Transistors (Q1) mit seinem Drain verbunden ist, wobei das Verhältnis der Abmessungen der zwei Transistoren das Bestimmen der gewünschten Temperaturerfassungsschwelle ermöglicht.

3. Integrierter Schaltkreis nach Anspruch 1 oder 2, dadurch gekennzeichnet, daß die Komparatorvorrichtungen eine Vorrichtung (SC'1) zum Spiegeln des durch einen der Transistoren fließenden Stromes umfassen, wobei diese Spiegelungsvorrichtung in Reihe mit dem zweiten Transistor (Q2) liegt.

4. Integrierter Schaltkreis nach Anspruch 3, dadurch gekennzeichnet, daß er eine erste Stromquelle (SC1) in Reihe mit dem ersten Transistor (Q1) zum Einprägen eines vorgegebenen Stroms (I1) in diesem Transistor und eine zweite Stromquelle (SC'1) zum Spiegeln mit einem festen Proportionalitätsfaktor des Stromes der ersten Quelle, wobei dieser Faktor das Festlegen der gewünschten Temperaturschwelle ermöglicht, umfaßt.

5. Integrierter Schaltkreis nach Anspruch 4, dadurch gekennzeichnet, daß die zweite Stromquelle (SC'1) in Reihe mit dem Drain des zweiten Transistors liegt.

6. Integrierter Schaltkreis nach Anspruch 5, dadurch gekennzeichnet, daß die zweite Stromquelle einen Zusatztransistor (N2) vom dem ersten und zweiten Transistor entgegengesetzten Typ umfaßt, wobei der Drain des Zusatztransistors mit dem Drain des zweiten Transistors verbunden ist und seine Source mit Masse verbunden ist, und daß der Ausgang des Detektors am Verbindungspunkt der Drains des zweiten Transistors und des Zusatztransistors abgegriffen wird.

7. Integrierter Schaltkreis nach einem der vorangehenden Ansprüche, dadurch gekennzeichnet, daß er in CMOS-Technologie realisiert ist mit Wannen vom dem des Substrats entgegengesetzten Leitfähigkeitstyp, daß der PN-Übergang gebildet wird durch einerseits eine Wanne, die mit der Source des ersten Transistors verbunden ist, und andererseits durch eine Oberflächendiffusion in der Wanne und vom der Wanne entgegengesetzten Typ, wobei diese Diffusion mit dem Versorgungsanschluß verbunden ist.

## Claims

1. Integrated circuit with temperature threshold detector, having two MOS transistors (Q1 and Q2) of the same conductivity type, a direct-biased p-n junction having a voltage drop Vbe at its terminals and connected between the source of a first one of these transistors (Q1) and a fixed potential (Vdd), and means (SC1, SC'1) of comparing currents flowing in the two transistors delivering as an output a temperature threshold detection signal, characterised in that the source of the second transistor (Q2) is connected directly to this fixed potential, so that the gate-source voltage (Vgs2) of the second transistor (Q2) is higher than the gate-source voltage (Vgs1) of the first transistor (Q1) by a value equal to the voltage droq Vbe.

2. Integrated circuit according to Claim 1, characterised in that the first transistor (Q1) has its gate connected to its drain, the ratio between the dimensions of the two transistors enabling the desired temperature detection threshold to be fixed.

3. Integrated circuit according to one of Claims 1 and 2, characterised in that the comparison means include a means (SC'1) of copying the current flowing in one of the transistors, this copying means being in series with the second transistor (Q2).

4. Integrated circuit according to Claim 3, characterised in that it has a first current source (SC1) in series with the first transistor (Q1) in order to impose a given current (I1) in this transistor, and a second current source (SC'1) copying, with a fixed proportionality factor, the current of the first source, this factor enabling the desired temperature threshold to be fixed.

5. Integrated circuit according to Claim 4, characterised in that the second current source (SC'1) is in series with the drain of the second transistor (Q2).

6. Integrated circuit according to Claim 5, characterised in that the second current source has a supplementary transistor (N2) of a type opposite to the first and second transistors, the supplementary transistor having its drain connected to the drain of the second transistor and its source connected to earth, and in that the output of the detector is taken at the junction point of the drains of the second transistor and of the supplementary transistor.

7. Integrated circuit according to one of the preceding claims, characterised in that it is produced in CMOS technology with wells of the opposite conductivity type to the substrate, and in that the p-n junction consists on the one hand of a well connected to the source of the first transistor, and on the other hand of the surface diffusion formed in the well and of opposite type to the well, this diffusion being connected to the supply terminal.
